# EUROPEAN PATENT SPECIFICATION

(11) **EP 2 228 196 B1**
(45) Date of publication and mention of the grant of the patent: **16.05.2012**
(21) Application number: 09154801.6
(22) Date of filing: 10.03.2009
(51) Int. Cl.: B29C 49/32, B29C 49/04, B29C 49/48

(54) **Blow-molding machine for thermoplastic pieces and containers**
Hohlkörperblasmaschine für thermoplastische Stücke und Behälter
Machine de moulage par soufflage pour pièces et conteneurs thermoplastiques

(43) Date of publication of application: 15.09.2010
(73) Proprietor: Pavan, Antonio Gumercindo, 13465-780 Americana (BR)
(72) Inventor: Pavan, Antonio Gumercindo, 13465-780 Americana (BR)
(74) Representative: Schmidt, Axel

(56) References cited:
- EP-A2- 1 884 342
- EP-A2- 1 914 061
- WO-A1-2007/115920
- WO-A1-2009/029248
- DE-A1- 19 528 753
- US-A- 4 552 526
- US-A- 6 036 469

## Description

### Field of the invention

The present invention relates to a blow-molding machine for thermoplastic pieces and containers, which is designed to work simultaneously with two or more molding lines.

The blow-molding machine for thermoplastic pieces and containers of the present invention is substantially more efficient than similar machines belonging to the known state of the art.

### Background of the invention

Conventional thermoplastic extruders include machines that are fed with various types of granulated and solid thermoplastic materials.

These thermoplastic materials are heated and consequently melted. Then, they are pumped throughout the entire length of the pipe of said extruders, originating hollow, continuous and semi-solid filaments (molten material). The final shape and area sizes in terms of height and width or diameter of these filaments correspond to the shape and sizes of the extrusion head used in each extruder.

Conventional thermoplastic blowers comprise machines capable of expanding thermoplastic raw materials, providing them with a final shape predetermined by the mold. Such raw materials are generally hollow and disposed within the water-cooled mold (where said molds belong to the blowers in question), and then they are pressurized by compressed air flows. These flows cause the raw materials to expand equally and assume the shape identical to the shape of the mold cavities.

Bottles made of thermoplastic materials are generally produced by thermoplastic blowers.

The state of the art also comprises blower extruders, which are generally used in the manufacture of plastic bottles (see e.g. EP 1 884 342 A2). A blower extruder, as its name suggests, combines a thermoplastic extruder with a thermoplastic blower, which will allow the extruded thermoplastic material to be directly blown.

A blower extruder, as described above, is in fact a blowing station coupled to an extrusion station. Conventionally, a blowing station includes components dimensioned to a single mold, that is, the current blowing stations belonging to the state of the art have only one outlet for molten thermoplastic material, and air outlets (perpendicular or transverse in relation to the inlet channel of thermoplastic molten materials) are consistent with the number of cavities existing in the molds. In short, each blowing station comprises only a single multiple cavity mold.

In addition to be an impeditive factor, it represents a major limitative factor, since it is necessary to install other blowing stations if possible, when it is desirable to increase the production of a blower extruder. However, a blower extruder has a limited number of blowing stations with maximum of two stations, and it occurs due to physical and mechanical factors.

Optionally, in order to achieve the desired increase in production, a second blower extruder is used. Such solution, which is financially expensive, demands physical space, and it is not always easily available in industries.

Therefore, from the aforementioned, it becomes obvious that is necessary to construct a blow-molding machine that solves the problems stated above, in an economic way, and without demanding excessive physical space.

### Brief description of the invention

The present invention was developed in order to overcome the problems mentioned above, by providing a new blow-molding machine for thermoplastic pieces and containers designed to work simultaneously with two or more molding lines.

The blow-molding machine for thermoplastic pieces and containers, object of the present invention, is formed by an extrusion set and a blow-molding set, according to claim 1.

Further embodiments are the subject of the dependent claims.

It should also be mentioned that in addition to increasing productivity, the present blow-molding machine also allows a slight increase in the diversity of finished products, provided that they are made from the same material, e.g. some type of thermoplastic material, with similar dimensions.

The present blow-molding machine is versatile, effective and practical, in addition to its numerous advantages.

The main advantages of using the blow-molding machine are directly related to the fact that the production is increased in an exponential way, without the need to use other blowing stations, and using almost the same physical space of a conventional similar machine.

It is also observed that this blow-molding machine provides a remarkable energy saving, since a double production is obtained with the same electric power consumption of a conventional blowing station.

### Brief description of drawings

The present invention will now be described in detail with reference to the accompanying drawings of embodiments, in which:
- Figure 1A is an enlarged detail view of an extrusion head coupled to a blowing station;
- Figure 1B is an enlarged detail view of an extrusion head coupled to two blowing stations;
- Figure 2 is a conceptual and enlarged detail view of an extrusion line attached to an extrusion head, which is coupled to two blowing stations;
- Figure 3A is a perspective view of a molding station;
- Figure 3B is a side view of a molding station;
- Figure 3C is a superior view of a molding station;
- Figure 4A is a perspective view of the blow-molding machine for thermoplastic pieces and containers, in accordance with the present invention;
- Figure 4B is a superior view of the blow-molding machine for thermoplastic pieces and containers, in accordance with the present invention;
- Figure 4C is a side view of the blow-molding machine for thermoplastic pieces and containers, in accordance with the present invention;
- Figure 5A is a detailed illustrative drawing which conceptually and schematically illustrates the first stage of the work performed by the blow-molding machine for thermoplastic pieces and containers, in accordance with the present invention, wherein said machine comprises two molding stations;
- Figure 5B illustrates, schematically and conceptually, the second stage of work performed by the blow-molding machine for thermoplastic pieces and containers, in accordance with the present invention, wherein said machine comprises two molding stations;
- Figure 5C illustrates, schematically and conceptually, the third stage of work performed by the blow-molding machine for thermoplastic pieces and containers, in accordance with the present invention, wherein said machine comprises two molding stations;
- Figure 5D illustrates, schematically and conceptually, the fourth stage of work performed by the blow-molding machine for thermoplastic pieces and containers, in accordance with the present invention, wherein said machine comprises two molding stations;
- Figure 6 illustrates an optional model of the blow-molding machine for thermoplastic pieces and containers, in accordance with the present invention, wherein said model consists of four extrusion lines.

### Detailed description of the invention

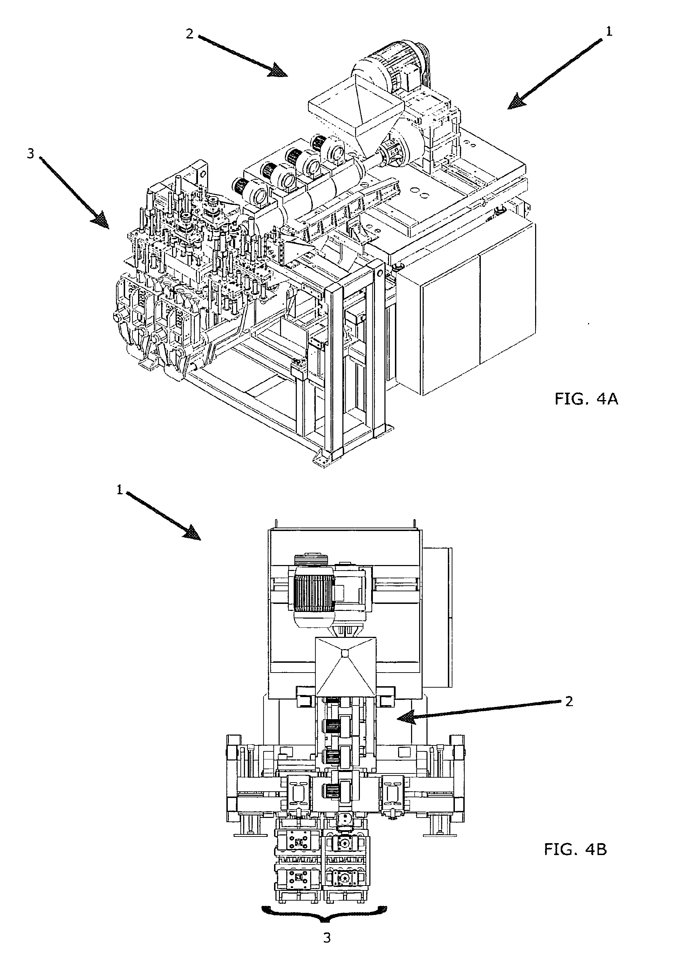

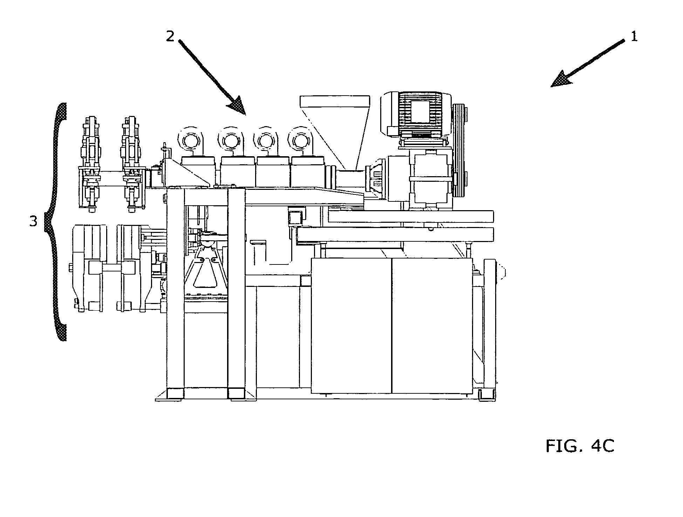

Based on the figures above, the blow-molding machine for thermoplastic pieces and containers, hereinafter designated by the reference numeral 1, has an extrusion set 2 and a blow-molding set 3. It is also important to emphasize that the blow-molding set 3 is coupled to the extrusion set 2. See Figure 4A for reference.

The extrusion set 2 is formed, preferably, by at least one conventional extrusion line, i.e., it comprises a main engine 2.1, a raw materials inlet 2.2, auxiliary cooling engines 2.3, a main duct 2.4, and a molten material outlet 2.5. It is also important to emphasize that the extrusion lines can be horizontal or vertical.

The blow-molding set 3 comprises an extrusion head 4 by at least one blowing station 5, and at least one molding station 6.

The extrusion head 4 comprises at least two drawing lines of thermoplastic material 4.1, wherein said drawing lines 4.1, regardless of its number, are connected internally. Each drawing line 4.1 has several drawing dies 4.2, wherein the number of said drawing dies 4.2 varies according to the needs of each model to be manufactured (blown).

Each blowing station 5 comprises at least two blowing lines 5.1, which are interconnected with each other. Each blowing line 5.1 comprises a number of blowing nozzles 5.2, wherein the number of said blowing nozzles 5.2 is equal to the number of drawing dies 4.2 and, therefore, equal to the number of cavities existing in the molds used.

Each molding station 6 comprises at least two molding lines 6.1, wherein each molding line 6.1 allows the use of a mold 6.2 having several cavities 6.3. The number and dimensions of said cavities 6.3 vary with the needs of each product to be blown. It is also important to emphasize that each molding station 6 has a system that performs the synchronic and simultaneous opening and closing of the molding lines 6.1, wherein said system is, preferably, hydraulic.

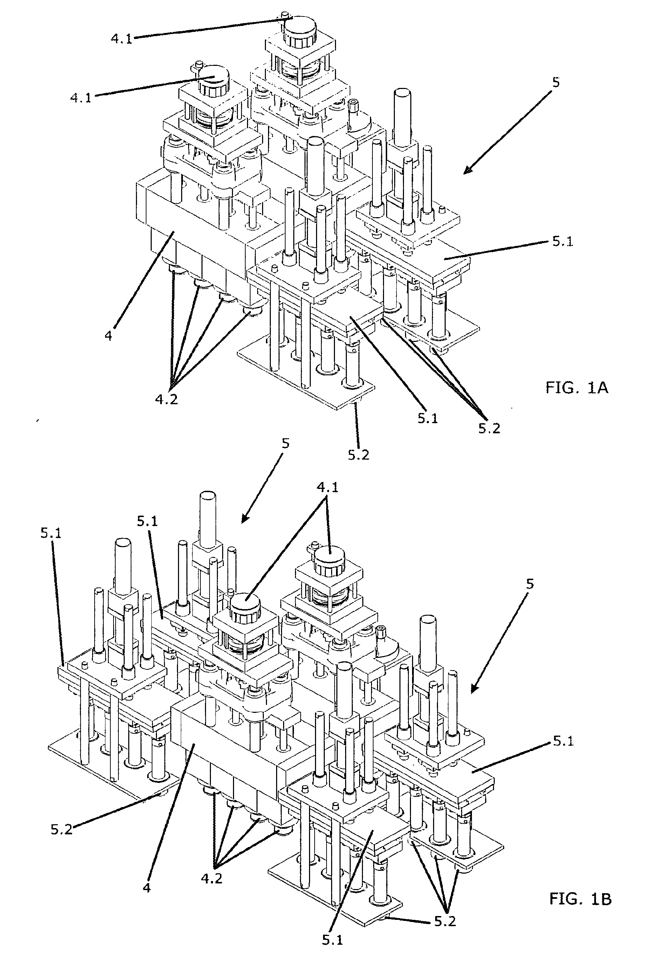

Figures 1A and 1B illustrate the arrangement of the extrusion head 4 and the blowing station 5. Figure 1A illustrates an extrusion head 4 and a blowing station 5, wherein, in this case, said extrusion head 4 contains two drawing lines 4.1, and the blowing station 5 contains two blowing lines 5.2. Said blowing station 5 is arranged in one side of the extrusion head 4.

Figure 1B, which illustrates a more complete and optional version, shows two blowing stations 5, wherein each blowing station is arranged in one of the sides of an extrusion head 4. In this case, said extrusion head 4 has two drawing lines 4.1 and each blowing station has two blowing lines 5.1.

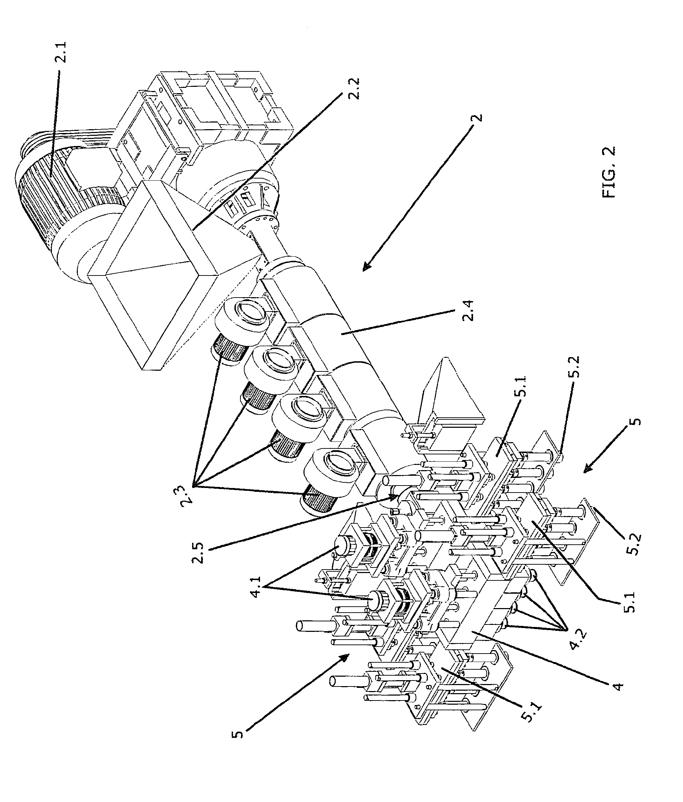

In a conceptual and detailed way, Figure 2 illustrates the blow-molding machine for thermoplastic pieces and containers 1. In this Figure, there is a conventional extrusion line attached to an extrusion head 4, wherein two blowing stations 5 are also coupled to said extrusion head 4.

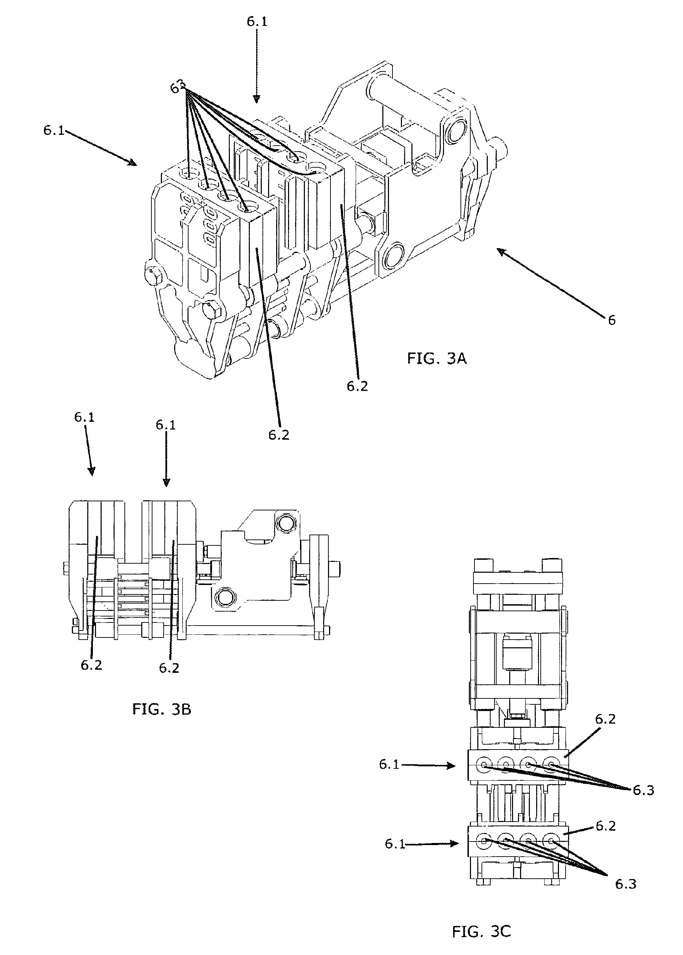

Figures 3A, 3B, and 3C are related to the molding station 6.

Since the construction of the blow-molding machine for thermoplastic pieces and containers 1 was described, it is easy to realize its operation and advantages.

Firstly, the granulated thermoplastic material is processed by the extruding station 2. This granulated thermoplastic material is molten and flows to the blow-molding set 3. This flow is constant while the blow-molding machine for thermoplastic pieces and containers of the present invention is running.

The molten material enters into the extrusion head 4, disseminates by drawing lines 4.1, and is expelled by drawing dies 4.2. The material expelled by said drawing dies 4.2 has a shape similar to a hose, that is, a non-rigid circular pipe.

While said material is expelled, the molding station 6 is arranged under the extrusion head 4, and wherein cavities 6.3 are aligned to the drawing dies 4.2. Thus, the thermoplastic material enters into the cavity 6.3 of each one of the molds 6.2 inserted into the molding lines 6.1.

After that, the molding station 6 moves horizontally and is positioned under a blowing station 5, wherein the cavities 6.3 already filled with thermoplastic material are aligned with the blowing nozzles 5.3. Then, the blowing occurs and, in this process, thermoplastic materials in each one of the cavities 6.3 assume the internal shape of said cavities 6.3.

Subsequently, the molds 6.2 are open, and the thermoplastic pieces and containers are removed by gravity force. Afterward, the molds 6.2 are closed and the process restarts.

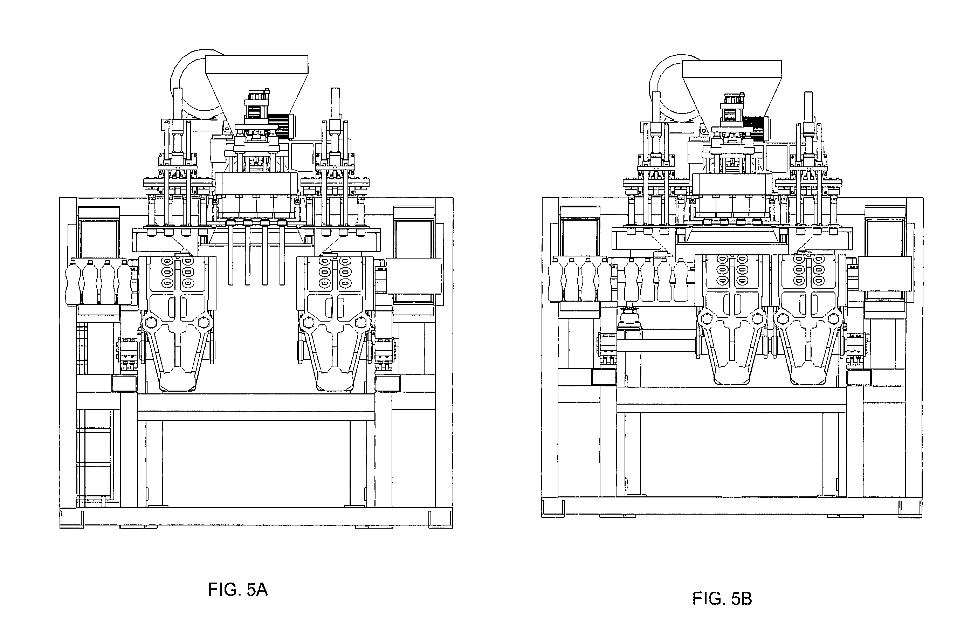

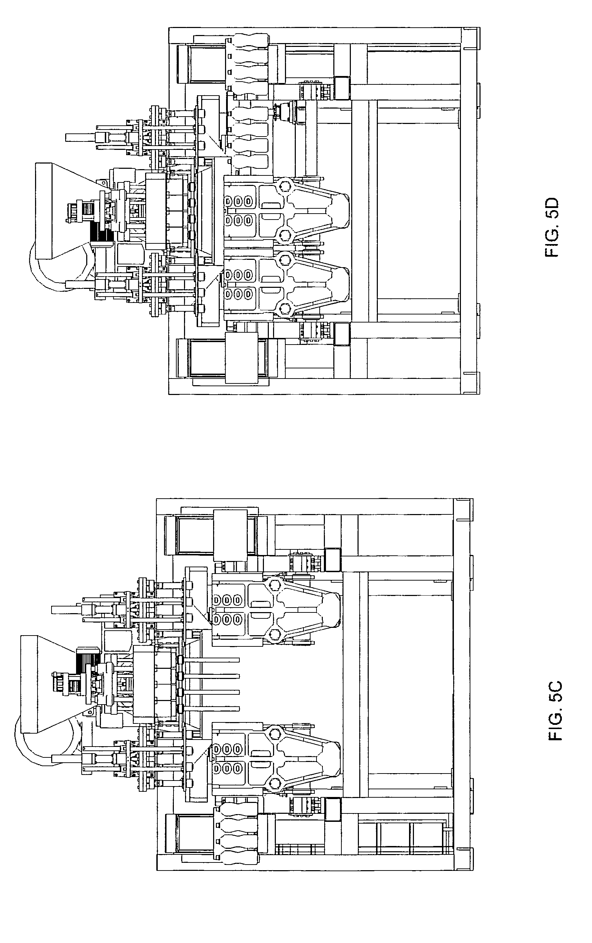

It is important to emphasize that each blow-molding machine for thermoplastic pieces and containers 1 may contain up to two molding stations 6, wherein, during a production process, a molding station 6 receives the molten thermoplastic material while the other molding station 6 receives the blowing nozzles 5.3. Schematically, this process is best observed through Figures 5A, 5B, 5C, and 5D.

Although the concepts of extrusion and blowing are already widespread, the concept disclosed herein, i.e., a blow-molding process in two or more molding lines, simultaneously, in a single molding station, is only possible by the implementation of the blow-molding set 3 disclosed herein.

It is also important to emphasize that the number of molding lines depends solely on the number of drawing lines 4.1 and blowing lines 5.1.

Based on the above context, it becomes easy to observe that the blow-molding machine for thermoplastic pieces and containers 1 presents many advantages over similar machines belonging to the known state of the art, because, as previously emphasized, a single blow-molding machine 1 is able to increase the production, in addition to allow a slight diversification of finished products, occupying the space conventionally used.

It is also important to emphasize that this blow-molding machine 1 comprises, optionally, an extrusion set 2 formed by more than one extrusion line, both vertical and horizontal, wherein all provided extrusion lines may be coupled to a single blow-molding station 3, or attached to various blow-molding stations 3.

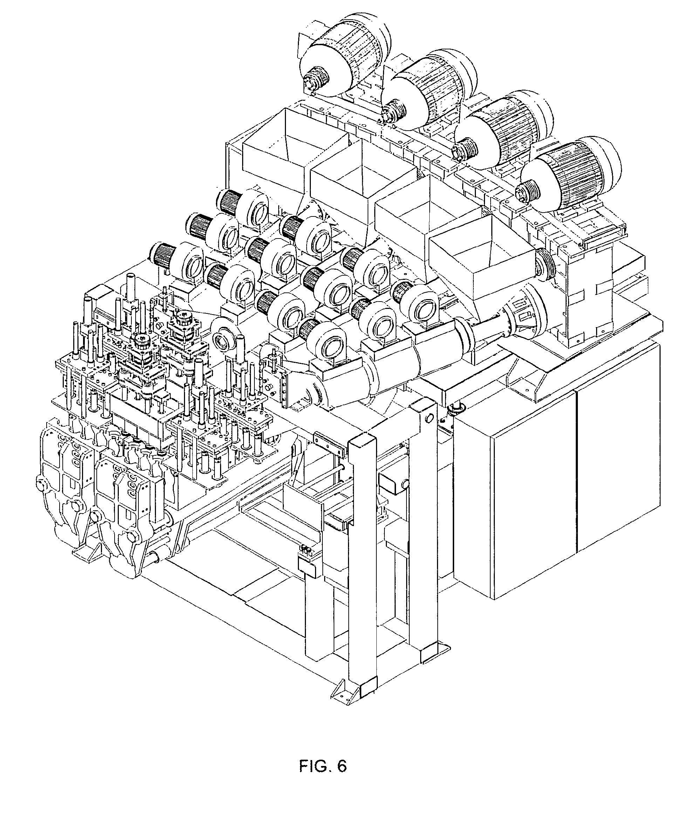

This configuration is better interpreted by analysis of Figure 6, where it is observed a blow-molding machine for thermoplastic pieces and containers 1 provide with four extrusion lines attached to a single extrusion head 4.

It should be observed that the figures described herein are intended to be illustrative of the devices and concepts herein disclosed, and are not intended to limit the scope of the present invention.

## Claims

1. A blow-molding machine for thermoplastic pieces and containers that comprises an extrusion set (2) and a blow-molding set (3), wherein said blow-molding set (3) is coupled to the extrusion set (2), said extrusion set (2) being formed by at least one conventional extrusion line, said blow-molding set (3) being formed by at least one extrusion head (4), at least a blowing station (5) and at least one molding station (6), **characterized by** the fact that the blow-molding set (3) comprises two or more molding lines in a single molding station, wherein each molding line (6.1) provides for the use of a mold (6.2) having several cavities (6.3);
said extrusion head (4) comprising at least two drawing lines of thermoplastic material (4.1) connected internally, each drawing line (4.1) having several drawing dies (4.2); and comprising each blowing station (5) comprising at least two blowing lines (5.1), wherein said blowing lines (5.1) are interconnected with each other, and each blowing line (5.1) has a number of blowing nozzles (5.2).

2. A blow-molding machine for thermoplastic pieces and containers, according to claim 1, **characterized by** the fact that said extrusion lines are horizontal or vertical.

3. A blow-molding machine for thermoplastic pieces and containers, according to claim 1, **characterized by** the fact that the number of said drawing dies (4.2) varies according to the needs of each model to be manufactured.

4. A blow-molding machine for thermoplastic pieces and containers, according to claim 1, **characterized by** the fact that the number of blowing nozzles (5.2) is equal to the number of drawing dies (4.2) and mold cavities (6.3).

5. A blow-molding machine for thermoplastic pieces and containers, according to claim 1, **characterized by** the fact that said system that performs the synchronic and simultaneous opening and closing of the molding lines (6.1) can be mechanical, hydraulic, pneumatic, or electric.

6. A blow-molding machine for thermoplastic pieces and containers, according to one of the claims 1 and 4, **characterized by** the fact that the blowing station (5) is located in one of the sides of the extrusion head (4), when there is a single blowing station (5); and in both sides of the extrusion head (4), when there are two blowing stations (5).

7. A blow-molding machine for thermoplastic pieces and containers, according to claim 1, **characterized by** the fact that the number of molding lines corresponds exclusively to the number of drawing lines (4.1) and blowing lines (5.1).

8. A blow-molding machine for thermoplastic pieces and containers, according to one of the claims 1, 2, 3, 4, 5, 6, and 7, **characterized by** the fact that said blow-molding machine for thermoplastic parts and containers (1) comprises, optionally, a extrusion set (2) formed by more than one extrusion line, wherein all provided extrusion lines may be coupled to one or more blow-molding stations (3).

## Patentansprüche

1. Eine Blasformmaschine für thermoplastische Stücke und Behälter, die eine Extrusionsbaugruppe (2) und eine Blasformbaugruppe (3) umfasst, wobei die Blasformbaugruppe (3) an die Extrusionsbaugruppe (2) gekoppelt ist, wobei die Extrusionsbaugruppe (2) durch mindestens eine herkömmliche Extrusionsstrecke gebildet wird, wobei die Blasformbaugruppe (3) durch mindestens einen Extrusionsspritzkopf (4), mindestens eine Blasstation (5) und mindestens eine Formstation (6) gebildet wird, **dadurch gekennzeichnet, dass** die Blasformbaugruppe (3) zwei oder mehr Formstrecken in einer einzigen Formstation umfasst, wobei jede Formstrecke (6.1) für die Verwendung einer Form (6.2) mit mehreren Hohlräumen (6.3) vorgesehen ist; wobei der Extrusionsspritzkopf (4) mindestens zwei Ziehstrecken für thermoplastisches Material (4.1), die intern verbunden sind, umfasst, wobei jede Ziehstrecke (4.1) mehrere Ziehdüsen (4.2) aufweist; und
wobei jede Blasstation (5) mindestens zwei Blasstrecken (5.1) umfasst, wobei die Blasstrecken (5.1) miteinander verbunden sind und jede Blasstrecke (5.1) eine Anzahl von Blasdüsen (5.2) aufweist.

2. Eine Blasformmaschine für thermoplastische Stücke und Behälter nach Anspruch 1, **dadurch gekennzeichnet, dass** die Extrusionsstrecken horizontal oder vertikal sind.

3. Eine Blasformmaschine für thermoplastische Stücke und Behälter nach Anspruch 1, **dadurch gekennzeichnet, dass** die Anzahl der Ziehdüsen (4.2) nach den Bedürfnissen jedes herzustellenden Modells variiert.

4. Eine Blasformmaschine für thermoplastische Stücke und Behälter nach Anspruch 1, **dadurch gekennzeichnet, dass** die Anzahl der Blasdüsen (5.2) gleich der Anzahl an Ziehdüsen (4.2) und Formhohlräumen (6.3) ist.

5. Eine Blasformmaschine für thermoplastische Stücke und Behälter nach Anspruch 1, **dadurch gekennzeichnet, dass** das System, das das synchrone und gleichzeitige Öffnen und Schließen der Formstrecken (6.1) bewirkt, mechanisch, hydraulisch, pneumatisch oder elektrisch sein kann.

6. Eine Blasformmaschine für thermoplastische Stücke und Behälter nach einem der Ansprüche 1 und 4, **dadurch gekennzeichnet, dass** das sich die Blasstation (5) an einer der Seiten des Extrusionsspritzkopfes (4) befindet, wenn es eine einzige Blasstation (5) gibt, und an beiden Seiten des Extrusionsspritzkopfes (4), wenn es zwei Blasstationen (5) gibt.

7. Eine Blasformmaschine für thermoplastische Stücke und Behälter nach Anspruch 1, **dadurch gekennzeichnet, dass** die Anzahl der Formstrecken ausschließlich der Anzahl an Ziehdüsen (4.1) und Blasstrecken (5.1) entspricht.

8. Eine Blasformmaschine für thermoplastische Stücke und Behälter nach einem der Ansprüche 1 2, 3, 4, 5, 6 und 7, **dadurch gekennzeichnet, dass** die Blasformmaschine für thermoplastische Stücke und Behälter (1) optional eine durch mehr als eine Extrusionsstrecke gebildete Extrusionsbaugruppe (2) umfasst, wobei alle vorgesehenen Extrusionsstrecken an eine oder mehrere Blasformstationen (3) gekoppelt sein können.

## Revendications

1. Machine de moulage par soufflage pour des pièces et des conteneurs thermoplastiques, qui comprend une unité d'extrusion (2) et une unité de moulage par soufflage (3), telles que ladite unité de moulage par soufflage (3) est couplée à l'unité d'extrusion (2), ladite unité d'extrusion (2) étant formée par au moins une ligne d'extrusion traditionnelle, ladite unité de moulage par soufflage (3) étant formée par au moins une tête d'extrusion (4), au moins une station de soufflage (5) et au moins une station de moulage (6),
**caractérisée en ce que** l'unité de moulage par soufflage (3) comprend deux ou plusieurs lignes de moulage dans une unique station de moulage, telles que chaque ligne de moulage (6.1) prévoit l'utilisation d'un moule (6.2) ayant plusieurs cavités (6.3) ;
ladite tête d'extrusion (4) comprenant au moins deux lignes d'étirage de matière thermoplastique (4.1) connectées de manière interne, chaque ligne d'étirage (4.1) ayant plusieurs matrices d'étirage (4.2) ; et
chaque station de soufflage (5) comprenant au moins deux lignes de soufflage (5.1), telles que lesdites lignes de soufflage (5.1) sont interconnectées l'une avec l'autre, et chaque ligne de soufflage (5.1) comprend un certain nombre de buses de soufflage (5.2).

2. Machine de moulage par soufflage pour des pièces et des conteneurs thermoplastiques, selon la revendication 1, **caractérisée en ce que** lesdites lignes d'extrusion sont horizontales ou verticales.

3. Machine de moulage par soufflage pour des pièces et des conteneurs thermoplastiques, selon la revendication 1, **caractérisée en ce que** le nombre desdits matrices d'étirage (4.2) varie en accord avec les besoins de chaque modèle qu'il s'agit de fabriquer.

4. Machine de moulage par soufflage pour des pièces et des conteneurs thermoplastiques, selon la revendication 1, **caractérisée en ce que** le nombre de buses de soufflage (5.2) est égal au nombre de matrices d'étirage (4.2) et de cavités de moule (6.3).

5. Machine de moulage par soufflage pour des pièces et des conteneurs thermoplastiques, selon la revendication 1, **caractérisée en ce que** ledit système qui exécute l'ouverture et la fermeture synchrone et simultanée des lignes de moulage (6.1) peut être mécanique, hydraulique, pneumatique ou électrique.

6. Machine de moulage par soufflage pour des pièces et des conteneurs thermoplastiques, selon l'une des revendications 1 et 4, **caractérisée en ce que** la station de soufflage (5) est située dans l'un des côtés de la tête d'extrusion (4) lorsqu'il existe une unique station de soufflage (5) ; et dans les deux côtés de la tête d'extrusion (4) lorsqu'il existe deux stations de soufflage (5).

7. Machine de moulage par soufflage pour des pièces et des conteneurs thermoplastiques, selon la revendication 1, **caractérisée en ce que** le nombre de lignes de moulage correspond exclusivement au nombre de lignes d'étirage (4.1) et de lignes de soufflage (5.1).

8. Machine de moulage par soufflage pour des pièces et des conteneurs thermoplastiques, selon l'une des revendications 1, 2, 3, 4, 5, 6, et 7, **caractérisée en ce que** ladite machine de moulage par soufflage pour des pièces et des conteneurs thermoplastiques (1) comprend en option une unité d'extrusion (2) formée par plus d'une ligne d'extrusion, et dans laquelle toutes les lignes d'extrusion prévues peuvent être couplées à une ou plusieurs stations de moulage par soufflage (3).
